(19) Europäisches Patentamt

European Patent Office

Office européen des brevets

(11) **EP 2 988 002 A1**

(12) **EUROPEAN PATENT APPLICATION**

(43) Date of publication:
**24.02.2016 Bulletin 2016/08**

(21) Application number: **14181970.6**

(22) Date of filing: **22.08.2014**

(51) Int Cl.:
*F03D 13/00* *(2016.01)*  *F03D 15/00* *(2016.01)*
*G01M 13/02* *(2006.01)*  *F16H 57/01* *(2012.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Areva Wind GmbH**
**27572 Bremerhaven (DE)**

(72) Inventor: **Mtauweg, Samer Dr.**
**27568 Bremerhaven (DE)**

(74) Representative: **Prinz & Partner mbB**
**Winterstrasse 2**
**22765 Hamburg (DE)**

(54) **A method for early error detection in a drive system, a system for early error detection, wind generator comprising the system and use of the system**

(57) A system for early error detection in a drive system of a wind generator is provided. The system comprises a first rotation sensor, which is coupled to an input shaft of the drive gear or transmission stage. This first sensor captures an input angle of rotation. Furthermore, the system comprises a second rotation sensor, which is coupled to an output shaft of the drive gear or transmission stage. The output angle, which is acquired by the second sensor, represents an output of the drive gear or transmission stage, which is performed in response to the input angle. The system also includes a control unit, which is configured to simultaneously capture a first and a second time dependent signal, which are indicative of the input angle and the output angle, respectively. The control unit is configured to determine a time dependent angle difference from the first and the second signal under consideration of the transmission ratio of the drive gear or transmission stage. Furthermore, the control unit analyzes this time dependent angle difference so as to perform early error detection in the drive system.

Fig. 2

EP 2 988 002 A1

## Description

FIELD OF THE INVENTION

The invention relates to a system for early error detection in a drive system of a wind generator. The invention also relates to a wind generator comprising this system and to the use of this system. Furthermore, the invention relates to a method for early error detection in a drive system of a wind generator.

BACKGROUND

One of the fundamental operating components in a wind generator is the pitch drive system for adjusting the pitch of the rotor blades during operation. In the pitch drives, the pitch bearing represents one of the critical components. When the pitch system is subject to an error during use, this can relate to various mechanical faults, for example bearing breakage, gear tooth damage, unbalance, misalignment or even shaft breaks. Mechanical damages can result from corrosion, friction, lack of grease, fatigue, etc. A malfunction in the pitch drive system increases the risk of blade pitch blocking, which can be critical for the wind generator. Moreover, service of the pitch drive system often results in extensive and undesired downtimes of the wind turbine.

It is therefore desirable to survey the operation of the pitch drive system. Document EP 2 329 141 B1 discloses a pitch control system, which incorporates a condition monitoring system for the pitch drives. The system applies a test signal to the blade pitch system, representing a desired pitch action. The actual pitch response, which is performed in reaction to the test signal, is subsequently detected. When the actual pitch angle differs from the command value by a certain threshold, this indicates a potential malfunction in the pitch drive. This, however, requires that there is already an initial damage of the pitch drive system. Furthermore, it may be undesirable to perform artificial test pitch actions, which are initiated by the condition monitoring system.

Detection of errors in the pitch drive system at a very early state, in particular prior to any serious damage and malfunction of the pitch drives, is therefore desirable.

SUMMARY

It is an object of the invention to provide a system for early error detection in a drive system of a wind generator and a wind generator comprising this system, which are enhanced with respect to the technical deficiencies in the prior art. Furthermore, it is an object of the invention to provide an enhanced method for early error detection in a drive system of a wind generator and an advantageous use of the system for early error detection.

In one aspect of the invention, a system for early error detection in a drive system of a wind generator is provided. The system comprises a first rotation sensor, which is coupled to an input shaft of a drive gear (or transmission stage). This first rotation sensor is configured to sense an input angle of rotation of the input shaft. Furthermore, the system comprises a second rotation sensor, which is coupled to an output shaft of the drive gear (transmission stage). This second sensor senses an output angle of the output shaft. The output angle, which is captured at the output shaft, is the response of the drive gear to the input angle.

The system according to aspects of the invention further comprises a control unit, which is configured to simultaneously capture a first and a second time dependent signal. The first time dependent signal is indicative of the input angle and is acquired at the first rotation sensor. The second time dependent signal is indicative of the output angle of the output shaft. This signal is captured at the second rotation sensor. The control unit is further configured to determine a time dependent angle difference from the first and the second time dependent signals under consideration the transmission ratio of the drive gear or transmission stage. This time dependent angle difference $\Delta\varphi(t)$ is then:

$$\Delta\varphi(t) = \varphi_{IN}(t) - iDR * \varphi_{OUT}(t) \, ,$$

wherein iDR is the inverted transmission ratio of the drive gear or transmission stage. In the ideal case (without any error), $\Delta\varphi(t)$ is then supposed to be zero. Deviations from zero can be small or larger which already indicates a behavior of the transmission stage. The time dependent angle difference $\Delta\varphi(t)$ is analyzed by the control unit, so as to perform an early error detection of the drive system.

Advantageously, the system for early error detection is capable of detecting errors in the drive gear or transmission stage at an early state, in particular prior to occurrence of serious damages. The first and the second rotation sensor are in particular high resolution angular sensors. These are capable of detecting the input angle and the output angle of the drive gear or transmission stage very precisely. The sensors are high precision sensors in terms of time and angle resolution. Consequently, small variations between the input and the output angle can be detected.

In contrast to conventional condition monitoring systems, the system for early error detection according to aspects of the invention dispenses with a numeric model for establishing a theoretical output signal, which - in accordance with a specific application of the system - can be matched with an actual angle, a pitch drive angle, for example. Condition monitoring systems, which apply a numerical model, always include considerable uncertainties with respect to the interpretation of the results. Advantageously, the system according to aspects of the invention operates at a significantly higher level of reliability.

Pitch drive monitoring systems, which are known from the prior art, are frequently based on a comparison between a command value and an actual value of the pitch angle. For detection of an error, these systems, however, require an initial damage in the pitch drive system. Advantageously, the system according to aspects of the invention detects errors at a significantly earlier stage. Secondary damages in the drive system, which result from initially small failures, can be avoided. Maintenance work can be optimized because the operator of the wind power plant is timely alerted.

In addition to this, the system for early error detection according to aspects of the invention can monitor the condition of the drives during normal operation of the wind generator. The system advantageously dispenses with artificial test operations, which are required in some conventional systems. These forced operations more or less disturb the production of electricity in the wind generator and interfere with the main control system. Advantageously, this can be avoided. The system for early error detection according to aspects of the invention works more or less autonomously. Its operation is independent from the main control of the drives. This simplifies the upgrade of existing wind generators.

The system according to the invention is basically applicable to any drive system of a wind generator, in particular to a pitch drive system (for adjusting the pitch angle of a rotor blade), a nacelle drive system (yaw or azimuth drive) and/or a main drive system (driving the main shaft of the wind generator). Depending on the actual drive system, the rotation sensors are coupled to input and output shafts of the any drive system.

According to an advantageous embodiment of the invention, the first sensor is coupled to a driving shaft of a drive motor, for example a pitch drive motor. This drives the input shaft of the drive gear, for example a pitch drive gear. The second sensor is a angle sensor for determining an angle of a component, for example a rotor blade, which is driven by the drive system. Many wind generators include a rotation sensor for detecting the rotor angle of the drive motor. Furthermore, angle sensors are typically available to detect the actual angles of a component, for example the nacelle or the rotor blades (pitch). In other words, sensors, which are already present in many wind generators, can be used as the first and second rotation sensor. Advantageously, this simplifies the upgrade of existing wind generators still further.

In an aspect of the invention, the control unit is further configured to perform a spectral analysis, in particular an order tracking analysis (order analysis), on the amplitude of the time dependent angle difference. The input angle may serve as a basis for the order tracking analysis. This order tracking analysis results in an amplitude spectrum and in an envelope curve spectrum.

In various experiments, particular features in the spectra have been identified with certain errors in the drive system. A collection of predetermined features was established. This can be stored in a database in the control unit. The plurality of features can include for example: certain patterns of peaks, certain peak shapes or shapes of the spectrum, peaks exceeding certain thresholds or groups of peaks at certain intervals, etc. One or more feature or a combination of predetermined features can be identified with a certain error, for example with a bearing failure or a shaft breakage, gearing damage, unbalance and / or a misalignment of gears in the drive gear.

Furthermore, the experiments revealed that the envelope curve spectrum in particular indicates a bearing failure or a shaft breakage. Certain features in the amplitude spectrum can be identified with a gearing damage, unbalance and / or a misalignment of gears.

In an embodiment of the invention, the control unit is configured to match at least one predetermined feature, with features in the order tracking analysis spectra. In particular, an error relative to a bearing failure or a shaft breakage can be indentified with a feature in the envelope curve spectrum. For determination of a gearing damage, unbalance and / or a misalignment of gears, the control unit matches at least one predetermined feature, which is assigned to one of these errors, with a feature in the amplitude spectrum.

Upon successful matching of at least one of the predetermined features with a feature in a spectrum, an error message relative to the error, which is assigned to the matched feature, is output by the control unit.

Advantageously, the system for early error detection is not only capable of detecting errors at a very early stage but is also capable of identifying the type of error. In particular for offshore wind generators, this represents valuable information. Upon entry of an error message, the service technicians can collect the potentially required spare parts to be taken to the offshore site. Since transport to offshore sites is always costly, it is advantageous if no superfluous but all necessary spare parts are transported. Savings with respect to service expenses can be expected.

In another aspect of the invention, a wind generator, in particular an offshore wind generator having a drive system, which is equipped with the system for early error detection according to aspects of the invention, is provided.

Similar advantages, which have been mentioned with respect to the system for early error detection, also apply to the wind generator. In still another aspect of the invention, a method for early error detection in a drive system of a wind generator is provided. A first time dependent signal, which is indicative of an input angle of rotation of an input shaft of a drive gear or transmission stage, is captured. Simultaneously, a second time dependent signal, which is indicative of an output angle of rotation of an output shaft of the drive gear or transmission stage, is captured. A time dependent angle difference is determined from the first and the second signal. This time dependent angle difference is analyzed so as to perform early error detection in the drive system.

According to an advantageous embodiment of the invention, the input angle of rotation is an angle of rotation of a rotor of a drive motor. The drive motor drives the input shaft of a drive gear. The output angle of rotation is an angle of a driven component., as for example the nacelle or a rotor blade or any component, which is driven by the drive system.

In still another embodiment of the invention, the step of analyzing the time dependent angle difference includes performing of a spectral analysis, in particular an order tracking analysis. This is performed on the amplitude of the time dependent angle difference. The order tracking analysis takes the input angle as a basis.

Predetermined features, which are indicative of a certain error, are matched with features, which reside the spectrum of the order tracking analysis. In particular, the order tracking analysis reveals an envelope curve spectrum. At least one predetermined feature, which is assigned to an error relative to a bearing failure or a shaft breakage, is matched with a feature in the envelope curve spectrum. Furthermore, the order tracking analysis can reveal an amplitude spectrum. At least one predetermined feature, which is assigned to an error relative to a gearing damage, unbalance and / or a misalignment of gears, is matched with a feature in the amplitude spectrum.

According to an embodiment of the invention, upon successful match of at least one of the predetermined features with a feature in a spectrum, an error message relative to the error, which is assigned to the matched feature, is output.

Same or similar advantages, which have been already mentioned with respect to the system for early error detection also apply to the method for early error detection in the same or similar way and will be therefore not repeated.

BRIEF DESCRIPTION OF DRAWINGS

Further aspects and features of the invention ensue from the following description of preferred embodiments of the invention with reference to the accompanying drawings, wherein

FIG. 1 is a simplified offshore wind generator, according to an embodiment of the invention,

FIG. 2 schematically illustrates a system for early error detection in a drive system, according to another embodiment of the invention,

FIG. 3 is a flow-chart illustrating a method for early error detection in a drive system, according to still another embodiment of the invention, and

FIG. 4 is an example of a spectrum, which shows the result of an order tracking analysis.

DETAILED DESCRIPTION OF EXAMPLE EMBODIMENTS

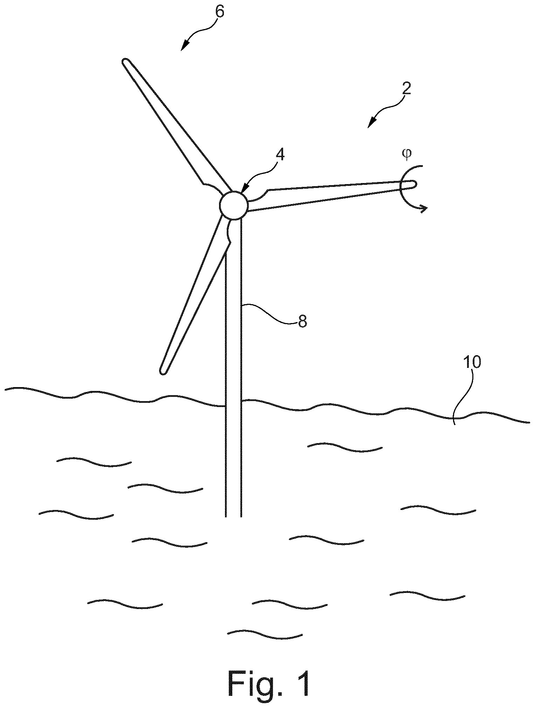

FIG. 1 is a simplified perspective view of a wind generator 2. By way of an example, the wind generator 2 is an offshore wind generator. It comprises a rotor hub 4 carrying the rotor blades 6. A supporting structure 8, for example a tower, carries a nacelle (not visible) and is based on a suitable underwater foundation in the sea 10. Each rotor blade 6 can be rotated by a pitch angle $\varphi$. The pitch action is performed by a pitch drive system, which is typically mounted in the rotor hub 4. The nacelle can be moved by an azimuth drive. Other drive system, which are not shown are also present. The present invention applies to any drive system having a drive motor and a drive gear or transmission stage.

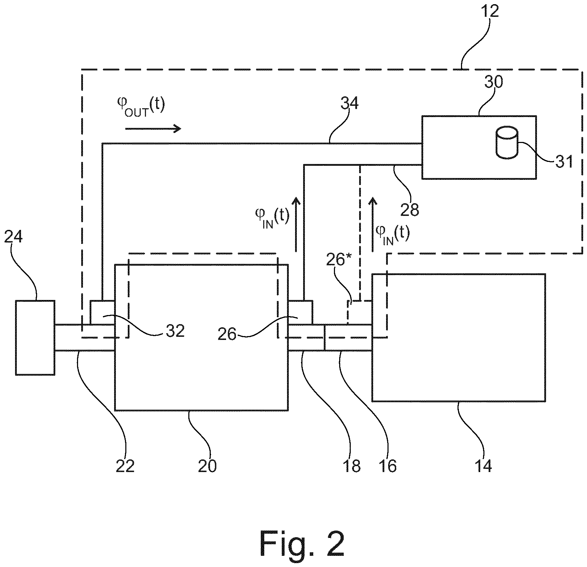

In FIG. 2, there is a simplified schematic drawing, which illustrates a system 12 for early error detection in a drive system, which can be a pitch drive system in this embodiment but can also be any other drive system of a wind turbine, in particular a nacelle drive (azimuth drive, yaw drive) system or a main drive system. If the drive system of a wind generator 2 includes a plurality of drives, at least some drives can be configured according to the embodiment of FIG. 2. The drive comprises a drive motor 14, for example an electric motor, having a drive shaft 16, which is coupled to an input shaft 18 of a drive gear 20 (can also be referred to as a transmission stage). The drive gear 20 can be a step-down planetary gear, for example for a pitch drive. The inverted gear transmission ratio of stage 20 is generally referred to as iDR.

In case of a pitch drive system, the pitch drive gear 20 comprises an output shaft 22 carrying a drive bevel 24. The drive bevel 24 is configured to engage an internal gear at a blade root of the rotor blade 6 of the wind generator 2. This is to rotate the rotor blade 6 by a pitch angle $\varphi$ (FIG. 1).

The system 12 for early error detection in the drive system comprises a first rotation sensor 26 for sensing an input angle of rotation $\varphi_{IN}(t)$. The input angle $\varphi_{IN}(t)$ represents an input to the drive gear 20 (or transmission stage 20). By way of an example only, the first rotation sensor 26 is coupled to the input shaft 18 of the drive gear 20. In an alternative embodiment, the first rotation sensor 26*, which is shown in dashed lines, is coupled to the driving shaft 16 of the drive motor 14. The first rotation sensor 26, 26* communicates a signal, which is indicative of the input angle $\varphi_{IN}(t)$ via a first data link 28 to a control unit 30. Furthermore, the system 12 for early error detection comprises a second rotation sensor 32, which is coupled to the output shaft 22 of drive gear 20. The second rotation sensor 32 acquires an output angle $\varphi_{OUT}(t)$, which is communicated to the control unit 30 via the second data link 34. The data links 28, 34 can be configured according to frequently known data communication technology. It can be wired or a wireless link.

The system for early error detection 12 is configured in that the signals for $\varphi_{IN}(t)$ and $\varphi_{OUT}(t)$ are ac-

quired simultaneously. In other words, the values refer to a common time scale. Furthermore, the output angle $\varphi_{OUT}(t)$ represents an output of the drive gear 20, which is performed in response to the input angle $\varphi_{IN}(t)$.

In particular, the first rotation sensor 26 and the second rotation sensor 32 are high precision sensors. This applies to the resolution on a time scale and to the angular resolution.

Both signals $\varphi_{IN}(t)$, $\varphi_{OUT}(t)$, which are captured by the control unit 30, are time dependent values. The control unit 30 is configured to calculate a time dependent angle difference $\Delta\varphi(t)$ from the two time dependent signals. By way of an example only, the angle difference $\Delta\varphi(t)$ can be calculated by subtracting the output angle $\varphi_{OUT}(t)$ from the input angle $\varphi_{IN}(t)$. However, the output angle $\varphi_{OUT}(t)$ should be corrected by the inverted transmission ratio *iDR* of the transmission stage 20. This generally provides that the so obtained difference $\Delta\varphi(t)$ is:

$$\Delta\varphi(t) = \varphi_{IN}(t) - iDR * \varphi_{OUT}(t)$$

In the ideal case, $\Delta\varphi(t)$ is then supposed to be zero. Deviations from zero can be small or larger which already indicates a behavior of the transmission stage. Any other mathematical operation, which reflects the difference between the input and the output angles can, however, also be applied.

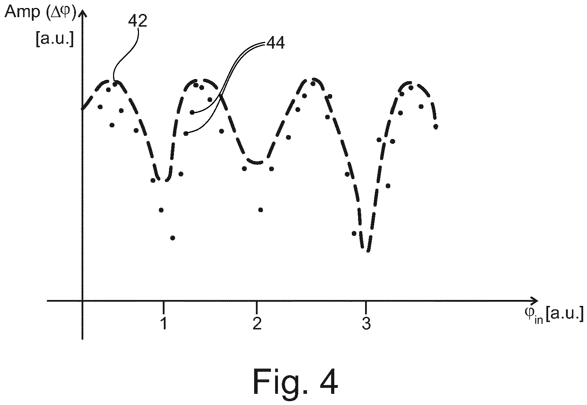

The control unit 30 is configured to perform a spectral analysis of the amplitude of the time dependent angle difference $\Delta\varphi(t)$. In particular, an order tracking analysis can be performed on the amplitude of the time dependent angle difference $\varphi\Delta(t)$. This order tracking analysis applies the input angle $\varphi_{IN}$ as a basis. An example for a spectrum of an order tracking analysis is shown in the simplified diagram of FIG. 4.

The order tracking analysis comprises an envelope curve spectrum 42, which is drawn in a dashed line. Furthermore, the plot includes an amplitude spectrum 44, which is drawn as a plurality of single points.

Various experiments revealed that the amplitude spectrum 44 can be analyzed for characteristic features, for example peaks exceeding certain thresholds, regular distanced peaks, certain patterns, etc. These features are indicative of certain gear errors. The allocation between the features and the errors can be stored in a database 31 in the control unit 31.

In addition to this, the experiments revealed that features, which can be identified in the amplitude spectrum 44, mainly indicate a gearing damage, unbalance and / or misalignment of gears in the drive gear 20.

Also the envelope curve 42 was analyzed with respect to particular features. When certain features can be identified in the amplitude spectrum 42, the various practical experiments revealed that these mainly indicate a bearing failure or a shaft breakage in the drive gear 20.

Within the context of this analysis, the high resolution of the sensors 26, 32 is rather crucial. This applies to the angular resolution as well as to the time resolution. Consequently, small variations between the input angle $\varphi_{IN}(t)$ and the output angle $\varphi_{OUT}(t)$ can be detected. Advantageously, this enables the system 12 to perform early error detection prior to serious secondary damages, which typically result from small initial damages.

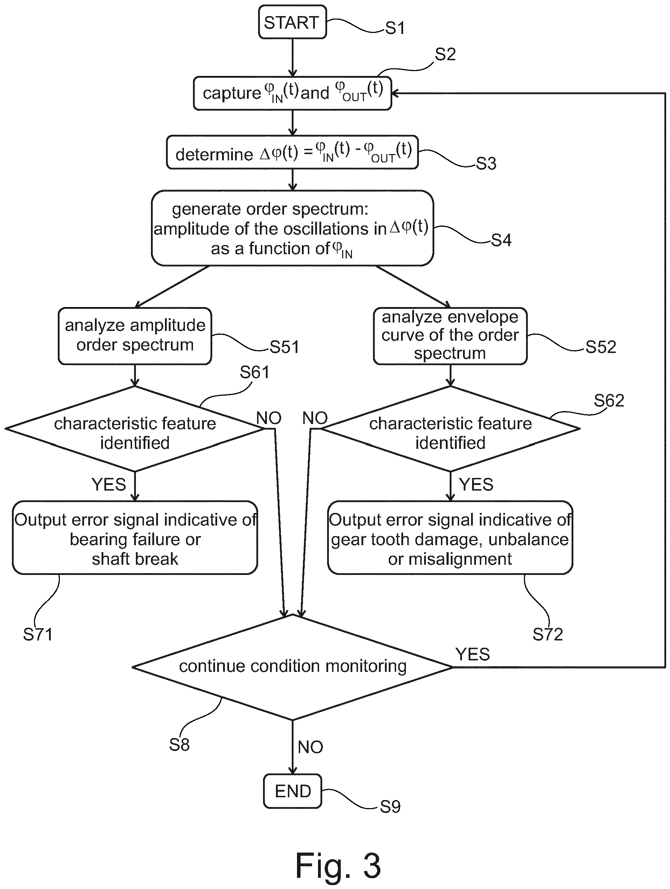

In FIG. 3, there is a flow chart illustrating a method for early error detection in a drive system of a wind generator 2, according to an embodiment of the invention.

The condition monitoring starts (step S1) with the acquisition of a first time dependent signal, which is indicative of the input angle of rotation $\varphi_{IN}(t)$ of the input shaft 18 of the drive gear 20. Simultaneously, a second time dependent signal is captured (step S2). This is indicative of an output angle of rotation $\varphi_{OUT}(t)$ of the output shaft 22 of the drive gear 20. A time dependent angle difference $\Delta\varphi(t)$ is subsequently determined, for example by subtracting the output angle $\varphi_{OUT}(t)$ from the input angle $\varphi_{IN}(t)$, while the output angle $\varphi_{OUT}(t)$ is multiplied with the transmission ratio iDR in accordance with the above equation(step S3). A spectral analysis is performed. For example, an order spectrum is generated. The order spectrum can either be determined with respect to the number of rotations of a motor, i.e. the spectrum is indicated as a function of multiples of the rotation frequency. The order spectrum can also be determined as function of multiples of a fixed rotation angle. In the present example, the amplitude of the oscillations in the time dependent angle difference $Amp(\Delta\varphi(t))$ is plotted as a function of the input angle $\varphi_{IN}$ (step S4).

An example for an order spectrum showing the amplitude of the angle difference $Amp(A\varphi)$ as a function of the input angle $\varphi_{IN}$, is shown in FIG. 4. Both variables are plotted in arbitrary units. The order spectrum includes an amplitude spectrum 44 and an envelope curve spectrum 42.

By way of an example only, there is a bearing failure at the input shaft 18 of the drive gear 20. This can be derived from the envelope curve spectrum 42, which shows maxima at regular intervals. The distance between these maxima on the abscissa corresponds with the input angle $\varphi_{IN}$ of the input shaft 18. For example, an input angle $\varphi_{IN}$ having the arbitrary number 1 indicates a single revolution of the input shaft 18. The peaks in the envelope spectrum 44 occur for every revolution of the input shaft 18, i.e. at approximately $\varphi_{IN}$ = 1,5 - 2,5 - 3,5 etc.

The amplitude spectrum 44 and the envelope curve spectrum 42 are analyzed with respect to characteristic features therein. These features can for example include peaks exceeding certain thresholds, peaks occurring at regular intervals, characteristic curve spectra, characteristic curve shapes, etc. The control unit 30 matches the predetermined features in the database 31 with the spectra. Various experiments revealed that the envelope curve spectrum 42, if it includes certain characteristic features, gives a strong hint towards a bearing failure or shaft breakage. In other words, if certain characteristic features can be identified in the envelope curve spectrum 42, this indicates that there is a bearing failure or a shaft breakage in the drive gear 20. Similarly, the amplitude spectrum 44 is analyzed with respect to certain features. These can be identified with for example gearing damage, unbalance and / or misalignment of gears in the drive gear 20, as they occur.

In the flow chart of FIG. 3, the amplitude spectrum (step S51) and the envelope curve spectrum (step S52) are analyzed simultaneously. However, this can be performed subsequently without substantial deviations from the principles, which are explained with reference to FIG. 3. When a characteristic feature is identified (step S61) in the amplitude order spectrum, an error signal is output, which is indicative of a bearing failure or a shaft breakage (step S71). When a characteristic feature is identified (step S62) in the envelope curve spectrum, an error signal is output, which is indicative of a gear tooth damage, unbalance or misalignment of gears in the drive gear 20 (step S72).

When no characteristic features can be identified, neither in the amplitude spectrum nor in the envelope curve spectrum (steps S61 and S62), the question is whether the condition monitoring should be continued (step S8). When the condition monitoring continues, the method follows a branch "YES" and returns to step S2. If the condition monitoring should be terminated, the method of early error detection ends in step S9.

Advantageously, the condition monitoring of drives according to aspects of the invention can be performed during normal operation of the wind generator 2. No artificial test action is required. Consequently, the system 12 does advantageously not interfere with standard operation. Furthermore, errors in the drive system can be detected at a very early stage, i.e. prior to occurrence of serious secondary damages in the system. This will likely shorten the service downtimes of the wind generator 2. The system 12 for early error detection is particularly advantageous for offshore wind generators.

In an advantageous embodiment, the drive system is a pitch drive system. The motor is a pitch drive motor and the drive gear is pitch drive gear. The driven component is then a rotor blade.

Although the invention has been described hereinabove with reference to specific embodiments, it is not limited to these embodiments and no doubt further alternatives will occur to the skilled person that lie within the scope of the invention as claimed.

**Claims**

1. A system for early error detection in a drive system of a wind generator, the system being **characterized by**

    a) a first rotation sensor, which is coupled to an input shaft of the drive gear or transmission stage, for sensing an input angle of rotation,
    b) a second rotation sensor, which is coupled to an output shaft of the drive gear or transmission stage, for sensing an output angle of rotation, wherein the output angle is an output of the drive gear or transmission stage, which is performed in response to the input angle,
    c) a control unit, which is configured to simultaneously capture a first time dependent signal for the input angle from the first rotation sensor and a second time dependent signal for the output angle from the second rotation sensor, wherein the control unit is further configured to determine a time dependent angle difference from the first and the second time dependent signals under consideration of a transmission ratio of the drive gear or transmission stage, and wherein the control unit is further configured to analyze this time dependent angle difference so as to perform an early error detection in the drive system.

2. The system according to claim 1, wherein the drive system is one of the following: a pitch drive system, a nacelle drive system, azimuth or yaw drive, and a main drive system.

3. The system according to claim 1 or 2, wherein the first sensor is coupled to a driving shaft of a drive motor, which drives the input shaft of the drive gear, and the second sensor is an angle sensor for determining an angle of a component which is driven by the drive system.

4. The system according to anyone of the preceding claims, wherein the control unit is further configured to perform a spectral analysis, in particular an order tracking analysis, of an amplitude of the time dependent angle difference, wherein this order tracking analysis uses the input angle as a basis.

5. The system according to claim 4, wherein the control unit is configured to perform an order tracking analysis, which results in an envelope curve spectrum, and wherein the control unit is further configured to match at least one predetermined feature, which is assigned to an error relative to a bearing failure or a shaft breakage, with a feature in the envelope curve spectrum.

6. The system according to claim 4 or 5, wherein the control unit is further configured to perform an order tracking analysis, which results in an amplitude spectrum, and wherein the control unit is configured to match at least one predetermined feature with a feature in the amplitude spectrum, the predetermined feature being assigned to an error relative to at least one of the following: a gearing damage, an unbalance of gears, a misalignment of gears, a roller bearing damage, a shaft damage.

7. The system according to claim 5 or 6, wherein upon successful match of at least one of the predetermined features with a feature in a spectrum, an error message relative to the error, which is assigned to the matched feature, is output.

8. A wind generator, in particular an offshore wind generator, having a drive system, which is equipped with the system for early error detection according to anyone of the preceding claims.

9. Use of a system according to anyone of claims 1 to 7 in a wind generator, in particular in an offshore wind generator, for early error detection in a drive system.

10. A method for early error detection in a drive system of a wind generator, the method being **characterized by** the steps of:

> a) capturing a first time dependent signal, which is indicative of an input angle of rotation of an input shaft of the drive gear or transmission stage,
> b) simultaneously capturing a second time dependent signal, which is indicative of an output angle of rotation of an output shaft of the drive gear or transmission stage,
> c) determining a time dependent angle difference from the first and the second signal under consideration of a transmission ratio of the drive gear or transmission stage and
> d) analyzing the time dependent angle difference so as to perform an early error detection in the drive system.

11. The method of early error detection according to claim 10, wherein the input angle of rotation is an angle of rotation of a rotor of a drive motor, which drives the input shaft of a drive gear, and the output angle of rotation is a angle of a component, which is driven by the drive system.

12. The method of early error detection according to claim 10 or 11, wherein the step of analyzing the time dependent angle difference includes performing a spectral analysis of an amplitude of the time dependent angle difference, in particular an order tracking analysis of an amplitude of the time dependent angle difference, wherein this order tracking analysis takes the input angle as a basis.

13. The method of early error detection according to claim 12, wherein the order tracking analysis results in an envelope curve spectrum, and wherein at least one predetermined feature, which is assigned to an error relative to a bearing failure or a shaft breakage, is matched with a feature in the envelope curve spectrum.

14. The method of early error detection according to claim 12 or 13, wherein the order tracking analysis results in an amplitude spectrum, and wherein at least one predetermined feature, which is assigned to an error relative to a gearing damage, unbalance and / or a misalignment of gears, is matched with a feature in the amplitude spectrum.

15. The method of early error detection according to claim 13 or 14, wherein upon successful match of at least one of the predetermined features with a feature in a spectrum, an error message relative to the error, which is assigned to the matched feature, is output.

Fig. 1

Fig. 2

START —S1

↓

capture $\varphi_{IN}(t)$ and $\varphi_{OUT}(t)$ —S2

↓

determine $\Delta\varphi(t) = \varphi_{IN}(t) - \varphi_{OUT}(t)$ —S3

↓

generate order spectrum:
amplitude of the oscillations in $\Delta\varphi(t)$
as a function of $\varphi_{IN}$ —S4

analyze amplitude
order spectrum —S51

analyze envelope
curve of the order
spectrum —S52

S61
characteristic feature
identified    NO    NO    characteristic feature
identified    S62

YES    YES

Output error signal indicative of
bearing failure or
shaft break

Output error signal indicative of
gear tooth damage, unbalance
or misalignment

S71    S72

continue condition monitoring    YES

S8    NO

END —S9

Fig. 3

Fig. 4

<table>
<tr><td colspan="4" align="center">Europäisches Patentamt<br>European Patent Office<br>Office européen des brevets</td><td align="center">**EUROPEAN SEARCH REPORT**</td><td>**Application Number**<br>EP 14 18 1970</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/046614 A1 (PETTERSSON BO [GB]) 13 February 2014 (2014-02-13) | 1-3,8-11 | INV.<br>F03D11/00 |
| Y | * paragraph [0001] - paragraph [0006]; figures 1-7 *<br>* paragraph [0015] - paragraph [0039] *<br>* paragraph [0050] - paragraph [0087]; claim 1 * | 4-7, 12-15 | F03D11/02<br>G01M13/02<br>F16H57/01 |
| Y | EP 2 072 975 A1 (SIEMENS AG [DE]; GRAM & JUHL AS [DK]) 24 June 2009 (2009-06-24)<br>* the whole document * | 4-7, 12-15 | |
| X | DE 10 2011 119466 A1 (BOSCH GMBH ROBERT [DE]) 29 May 2013 (2013-05-29)<br>* paragraph [0020] - paragraph [0026]; claim 1; figures 1,2 * | 1-15 | |
| X | EP 2 189 656 A2 (VESTAS WIND SYS AS [DK]) 26 May 2010 (2010-05-26)<br>* paragraph [0021] - paragraph [0032]; figures 1-4 * | 1-3,8-11 | |
| A | WO 94/24537 A1 (MONITORING TECH CORP [US]) 27 October 1994 (1994-10-27)<br>* the whole document * | 1-15 | TECHNICAL FIELDS SEARCHED (IPC)<br><br>F03D<br>G01M<br>F16H |

The present search report has been drawn up for all claims

| Place of search | Date of completion of the search | Examiner |
|---|---|---|
| The Hague | 27 January 2015 | Herdemann, Claire |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 18 1970

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2015

| Patent document cited in search report | | Publication date | Patent family member(s) | | Publication date |
|---|---|---|---|---|---|
| US 2014046614 | A1 | 13-02-2014 | AU | 2012228479 A1 | 15-08-2013 |
| | | | CA | 2827009 A1 | 20-09-2012 |
| | | | CN | 103430004 A | 04-12-2013 |
| | | | EP | 2498076 A1 | 12-09-2012 |
| | | | EP | 2684018 A1 | 15-01-2014 |
| | | | JP | 2014515096 A | 26-06-2014 |
| | | | KR | 20130133040 A | 05-12-2013 |
| | | | US | 2014046614 A1 | 13-02-2014 |
| | | | WO | 2012123351 A1 | 20-09-2012 |
| EP 2072975 | A1 | 24-06-2009 | CN | 101464212 A | 24-06-2009 |
| | | | EP | 2072975 A1 | 24-06-2009 |
| | | | US | 2009162186 A1 | 25-06-2009 |
| DE 102011119466 | A1 | 29-05-2013 | CN | 104093976 A | 08-10-2014 |
| | | | DE | 102011119466 A1 | 29-05-2013 |
| | | | US | 2014318226 A1 | 30-10-2014 |
| | | | WO | 2013075777 A1 | 30-05-2013 |
| EP 2189656 | A2 | 26-05-2010 | CN | 101915208 A | 15-12-2010 |
| | | | EP | 2189656 A2 | 26-05-2010 |
| | | | US | 2010143124 A1 | 10-06-2010 |
| WO 9424537 | A1 | 27-10-1994 | AU | 6627894 A | 08-11-1994 |
| | | | CA | 2159920 A1 | 27-10-1994 |
| | | | DE | 69421393 D1 | 02-12-1999 |
| | | | DE | 69421393 T2 | 31-08-2000 |
| | | | EP | 0693176 A1 | 24-01-1996 |
| | | | US | 5511422 A | 30-04-1996 |
| | | | WO | 9424537 A1 | 27-10-1994 |

EPO FORM P0459

For more details about this annex : see Official Journal of the European Patent Office, No. 12/82

**EP 2 988 002 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2329141 B1